# FASCICULE DE BREVET EUROPEEN

(11) **EP 0 355 115 B1**
(45) Date de publication et mention de la délivrance du brevet: **27.01.1993**
(21) Numéro de dépôt: 88903863.4
(22) Date de dépôt: 22.04.1988
(51) Int. Cl.: E05F 15/14, G05B 19/40

(54) **PROCEDE DE REGULATION DE LA VITESSE DE ROTATION D'UN MOTEUR ELECTRIQUE**
REGELVERFAHREN FÜR DIE ROTATIONSGESCHWINDIGKEIT EINES ELEKTRISCHEN MOTORS
PROCESS FOR REGULATING THE SPEED OF ROTATION OF AN ELECTRIC MOTOR

(30) Priorité: 23.04.1987 FR 8705962
(43) Date de publication de la demande: 28.02.1990
(73) Titulaire: LOGILIFT SARL, F-59710 Pont-a-Marcq (FR)
(72) Inventeur: EVIN, Jean, F-59710 Pont-à-Marcq (FR)
(74) Mandataire: Ecrepont, Robert
(86) Numéro de dépôt international: FR8800198
(87) Numéro de publication internationale: WO8808477

(56) Documents cités:
- EP-A- 0 021 968
- EP-A- 0 195 842
- DE-A- 2 625 397
- FR-A- 2 373 819
- GB-A- 2 103 710
- US-A- 4 364 003

## Description

L'invention se rapporte à un procédé de régulation de la vitesse de rotation d'un moteur électrique à courant alternatif notamment un moteur asynchrone alimenté sous une fréquence variable selon une consigne entre deux positions angulaires extrêmes réglables du rotor espacées d'un nombre de tours de rotor réglable et dans lesquelles positions la vitesse est nulle.

L'invention se rapporte également aux moyens mettant en oeuvre ce procédé ainsi qu'aux moteurs pourvus de ces moyens.

Plus particulièrement mais non exclusivement, le domaine d'application d'un tel procédé vise les équipements d'ouverture et de fermeture de porte à déplacement linéaire telles que celles équipant les ascenseurs où les montes charge, voire les entrées de batiments.

Dans ce domaine, le moteur est associé à des organes de transmission entraînant au moins un battant entre deux positions où la porte est soit ouverte soit fermée, ce qui en fonction du rapport de la transmission correspond à un certain nombre de tours du rotor entre les deux positions extrêmes précitées réglées notamment à l'installation en fonction de la largeur de la porte.

Afin d'éviter que les portes aient des mouvements brutaux, préjudiciables à la tenue mécanique, les portes doivent avoir un mouvement accéléré depuis leur vitesse nulle de départ jusqu'à une vitesse palier puis un mouvement ralenti jusqu'à la vitesse nulle à l'arrivée.

A cet effet, il est connu, par un système bielle manivelle de transformer le mouvement circulaire uniforme engendré par l'arbre du moteur en un mouvement sensiblement alternatif dont la vitesse est une fonction sinusoïdale.

Ces organes de transmission sont toutefois encombrants, coûteux et limités à des portes de largeur semblable.

Notamment pour les portes d'ascenseur, et ce pour des raisons évidentes de sécurité, les normes en vigueur fixent une énergie de fermeture maximale donc une vitesse de fermeture maximale.

Sauf avec des portes d'un type tel qu'en ouverture totale, elles présenteraient des risques de pincement, ces normes et raisons n'existent pratiquement pas à l'ouverture des portes qui peut donc généralement s'effectuer à une vitesse nettement plus importante que celle de fermeture, ne serait-ce que pour Naccélérer l'évacuation de la cabine.

Pour éviter au moins l'inconvénient de l'encombrement, on connaît des portes dont les organes de transmission réalisent un système vis écrou, dont la vis, entraînée en rotation par le moteur, peut avoir un pas variable grace auquel, les portes sont au cours de leur ouverture ou de leur fermeture animées d'un mouvement qui, dans une phase initiale, est accéléré puis uniforme et finalement décéléré.

Bien que ce système soit de conception relativement simple, il n'est adaptable qu'à une porte de largeur donnée.

Afin de s'adapter à des portes de largeur variable dans de grandes proportions, il est connu de commander l'ouverture et la fermeture de portes à au moins un vantail à déplacement linéaire par une courroie sans fin sur laquelle est fixé un organe de liaison au vantail.

Afin de réguler la vitesse d'un tel vantail, tant à son ouverture qu'à sa fermeture et notamment de provoquer son ralentissement au voisinage des limites de sa course, on peut évidemment au lieu d'agir au niveau des organes de transmission, agir au niveau du moteur.

Dans une application proche, on connaît en effet (DE-A-2625397) un procédé et des moyens de régulation de la vitesse de rotation d'un moteur électrique à courant alternatif, notamment mais non exclusivement un moteur asynchrone, alimenté sous une fréquence variable selon une consigne entre deux positions angulaires extrêmes réglables du rotor, espacées d'un nombre de tours de rotor réglable et dans lesquelles positions extrêmes la vitesse est nulle.

Associé aux organes de transmission tels la vis ou la courroie, le moteur reçoit alors, sous le contrôle d'un dispositif adéquat tel un microprocesseur, une alimentation qui varie selon une consigne en fonction de l'état de signaux représentatifs de la position du vantail au long de sa course afin d'identifier la partie de la consigne qui s'applique.

La fermeture et l'ouverture des portes peuvent ainsi s'opérer à une vitesse optimale.

Si un tel ensemble, relativement simple, permet de régler à volonté la vitesse de fermeture et la vitesse d'ouverture des portes, pour qu'il soit opérationnel, il nécessite la génération des susdits signaux représentatifs de la position du vantail et donc des informations extérieures au dit ensemble.

Pour élaborer ces informations extérieures, il est connu de disposer au long du parcours de chaque vantail des capteurs coopérant avec un organe porté par le vantail et notamment au moins quatre contacts par vantail dont deux de fin de course et deux de changement d'allure à une certaine distance de la fin de course.

Pour générer leurs informations, ces capteurs doivent être alimentés par un circuit externe ce qui, en raison du nombre des capteurs, de la longueur des cables utilisés pour la liaison à l'armoire de commande ainsi que des caractéristiques mécaniques que requiert cette liaison, augmente les risques de détérioration et contribue à l'accroissement du prix de revient d'un tel dispositif.

On peut imaginer de faire appel à un compteur déterminant le nombre de tours du rotor à partir de la détection du nombre de crans portés par un disque associé à l'arbre moteur ou par un ruban paralléle au parcours ce qui toutefois serait trop coûteux.

L'invention a pour but un procêdé de régulation d'un moteur électrique à courant alternatif triphasé à un seul enroulement qui, par exemple, utilisé pour entraîner l'ouverture et la fermeture d'au moins un vantail de porte à déplacement linéaire, ne nécessite pas d'informations élaborées à l'extérieur de l'ensemble formé par le moteur avec son alimentation et les organes de transmission.

A cet effet, l'invention a pour objet un procédé de régulation du type précité notamment caractérisé en ce que :
- à l'initialisation, selon le déplacement angulaire du rotor qu'on souhaite obtenir, lequel est prédéterminé en fonction de l'application spécifique :
   · on détermine, que ce soit par calcul ou expérimentation, le nombre théorique total de périodes complètes du courant alternatif devant alimenter le moteur pour l'entrainer sur un tel déplacement angulaire,
   · on mémorise ce nombre théorique total,
   · en fonction du numéro d'ordre de ces périodes complètes dans ce nombre théorique total, voire même du sens du mouvement de rotation commandé, on élabore une table des variations de l'alimentation du moteur à prévoir pour, théoriquement, respecter une consigne de vitesse prédéterminée,
- lors de l'utilisation :
   · on compte le nombre réel instantané des périodes complètes du courant alternatif alimentant le moteur depuis la position angulaire initiale,
   · en fonction de chaque valeur du nombre réel instantané, voire même du sens du mouvement de rotation commandé, on adapte l'alimentation du moteur sur la valeur donnée par la table pour le nombre théorique intermédiaire correspondant.

L'invention a également pour objet les moyens tels que definis à la neven-dication 6 oeuvre ce procédé.

L'invention sera mieux comprise à l'aide de la description ci-aprés faite, à titre d'exemple non limitatif, en regard du dessin ci-annexé qui représente schématiquement :

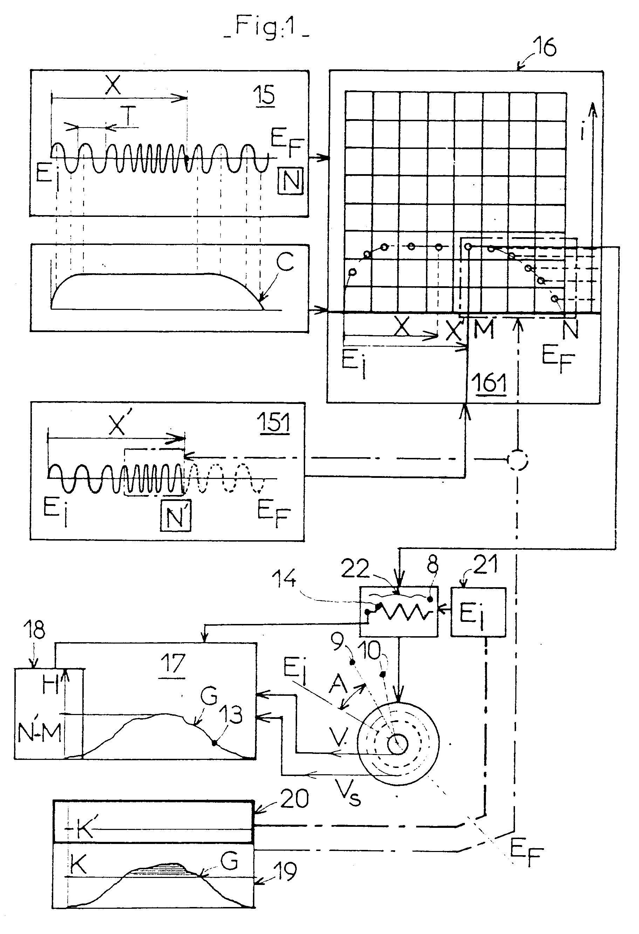

- figure 1 : le synoptique du procédé,
- figure 2 : une porte à déplacement linéaire équipée des moyens mettant en oeuvre le procédé.

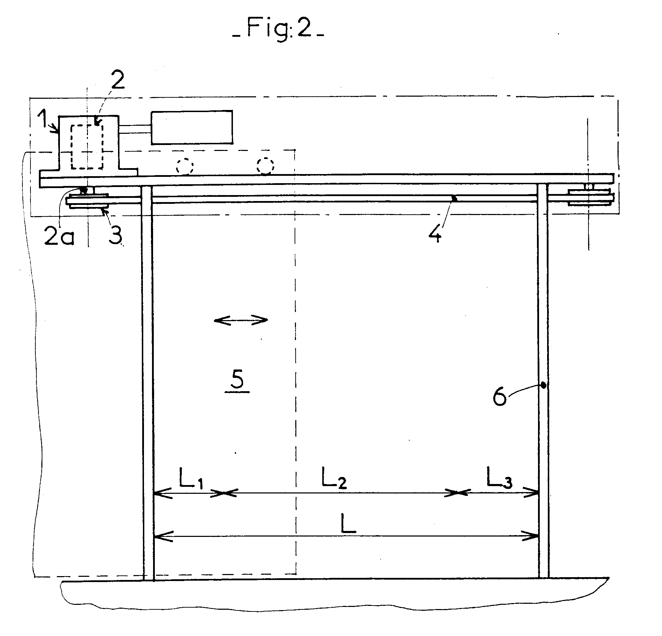

En se reportant au dessin (figure 2), on voit un moteur électrique 1 tel un moteur asynchrone, alimenté sous une fréquence variable selon une consigne, dont le rotor 2 a son arbre 2ₐ couplé à une poulie 3 entraînant une courroie sans fin 4 passée par ailleurs sur une poulie de renvoi et dont les brins sont parallèles à la direction et ont une longueur au moins égale à l'amplitude du déplacement L déterminé d'ouverture et de fermeture du vantail 5 de portes à déplacement linéaire telles celles équipant les ascenseurs, lequel vantail est alors lié en translation à l'un des brins de la courroie par tous moyens connus (non représentés).

Pour respecter les normes en vigueur, tout en accélérant l'évacuation de la cabine, le vantail est, de préférence, animé d'un mouvement dont la vitesse à l'ouverture est supérieure à celle à la fermeture.

En outre, ces vitesses respectives sont variables sur les différents tronçons du parcours pour, sur un premier tronçon L₁ démarrer à une accélération déterminée avant d'atteindre une vitesse palier maintenue sur un second tronçon L₂, puis pour sur un troisième tronçon L₃ réglable ralentir progressivement, étant alors au voisinage de sa fin de course supposée ici contre le montant 6 de l'huisserie.

Ces accélération, vitesse palier, et décélération sont, pour les différents tronçons, prédéterminés et forment une consigne "C" accessible à l'installation et fixant pour chaque point du déplacement les valeurs du courant devant alimenter le moteur pour obtenir l'évolution souhaitée de la vitesse.

Cette amptitude L détermine pour le moteur 1 une plage de fonctionnement bornée par un état initial E₁ et un état final E_{F} correspondant respectivement à une position de totale ouverture ou de totale fermeture du vantail 5.

Ainsi donc, pour commander la rotation du rotor 2 depuis l'état initial E_{I} jusqu'à l'état final E_{F} et cela à une vitesse variant en accord avec la consigne C, selon l'invention :
- à l'initialisation, selon le déplacement angulaire du rotor 2 qu'on souhaite obtenir, lequel est prédéterminé en fonction de l'application spécifique :
   · on détermine, que ce soit par calcul ou expérimentation, le nombre théorique total N de périodes complètes T du courant alternatif i devant alimenter le moteur 1 pour l'entrainer sur un tel déplacement angulaire,
   · on mémorise ce nombre théorique total N,
   · en fonction du numéro d'ordre X de ces périodes T complètes dans leur nombre théorique total N, voire même du sens du mouvement de rotation commandé, on élabore une table des valeurs de l'alimentation du moteur 1 à prévoir pour, théoriquement, respecter une consigne C de vitesse prédéterminée,
- lors de l'utilisation :
   · on compte le nombre réel instantané N' des périodes complètes du courant alternatif i, alimentant le moteur 1 depuis une position extrême initiale E_{I},
   · en fonction de chaque valeur X' du nombre réel instantané N', voire même du sens du mouvement de rotation commandé, on adapte l'alimentation du moteur 1 sur la valeur donnée par la table pour le nombre théorique intermédiaire M correspondant.

En fonction de la charge entraînée par le moteur 1, il peut apparaître un décalage entre la position réelle 9 du rotor 2 et la position 10 obtenue par comptage des périodes du signal 7 provoquant sa rotation.

A cet effet, pour tenir compte de ce décalage, selon l'invention :
- on élabore un signal G représentatif de la différence dite "glissement" entre la vitesse de synchronisme V_{S} du moteur et la vitesse réelle V de rotation de son rotor 2,
- en fonction du niveau H du signal de glissement G, et de la position angulaire A du rotor 2, on évalue l'écart au moins prévisible entre le nombre réel N' de périodes du courant ayant alimenté le moteur 1 et le nombre théorique intermédiaire M correspondant sur au moins une partie du déplacement entre les positions extrémes E_{I} et E_{F},
- en fonction de cet écart, au moins pour un certain niveau K de ce signal G, on induit une compensation au moins partielle de l'effet de glissement.

Pour cette compensation, dans une forme préférée de réalisation, dans la table, pour le reste de l'écart angulaire du déplacement en cours, on applique un facteur de correction à au moins une partie des valeurs initialement prévue.

Dans une variante de réalisation, selon le sens de la compensation, on corrige en plus ou en moins le nombre réel N' de périodes comptées.

De même, on compare ce signal de glissement G à un seuil maximum K' et, dès qu'on détecte le franchissement de ce seuil maximum, au lieu de chercher une compensation, on commande la rotation inverse du rotor afin que celui-ci revienne vers sa position initiale E_{I}.

Ce procédé est en outre caractérisé en ce que, notamment en vitesse palier, pour déterminer le signal 13 représentatif du glissement G on mesure l'intensité i du courant alimentant le moteur.

Lors du ralentissement, celui-ci produisant une surintensité, on se reporte à une autre valeur de référence.

Ce glissement peut évidemment se produire dans un sens ou dans l'autre par exemple parce que le vantail rencontre un obstacle ou à l'inverse lorsqu'on assiste son déplacement.

Un éventuel glissement du rotor 2 occasionné par une charge anormale agissant en plus ou en moins sur le vantail 5 provoquera à l'intérieur même du circuit alimentant le moteur une variation d'intensité mesurée par exemple aux bornes d'un de ses composants tels une résistance 14.

De préférence, pour initialiser l'ensemble, on détermine le nombre théorique N de périodes complètes par expérimentation, en comptant le nombre de périodes complètes lors d'un déplacement du vantail d'une position extrême à l'autre au moyen du moteur 1 alimenté à basse fréquence puis en opérant une deuxième lecture à fréquence normale.

En fonction des efforts normaux, l'installateur peut corriger la consigne pour rentrer une précompensation.

Par ailleurs, à l'arrivée en position extrême, on peut ajouter à la consigne une fréquence supplémentaire appliquant un couple de maintien freinant l'effet de rebondissement de la porte.

Les moyens en vue de la mise en oeuvre du procédé de commande sont principalement caractérisés en ce qu'ils comprennent :
- un moyen 15 de détermination et de mémorisation du nombre total théorique N de périodes T complètes du courant alternatif i alimentant le moteur 1 nécessaire pour aller d'une position extrême E_{I} , à l'autre E_{F},
- un moyen 16 qui, en fonction du numéro d'ordre X de chacune de ces périodes T dans leur nombre total N, établit une table des variations de l'alimentation du moteur à prévoir pour théoriquement respecter une consigne de vitesse prédéterminée,
- un moyen 151 de comptage du nombre réel instantané N' de périodes complètes du courant i alimentant le moteur 1 depuis une position extrême E_{I} vers l'autre position extrême E_{F},
- un moyen 161 qui, en fonction de chaque valeur X' du nombre réel instantané N', voire même du sens de déplacement, adapte l'alimentation du moteur 1 sur la valeur donnée par la table pour le nombre théorique M intermédiaire correspondant.

Les moyens comprennent en outre :
- un moyen 17 d'élaboration d'un signal G représentatif de la différence dite "glissement" entre la vitesse de synchronisme Vₛ du moteur et la vitesse réelle V de rotation de son rotor 2,
- un moyen 18 qui, en fonction du niveau H du signal de glissement G et de la position angulaire A du rotor 2 évalue l'écart au moins prévisible entre le nombre réel instantané N' de périodes du courant alimentant le moteur 1 et le nombre théorique intermédiaire M correspondant sur au moins une partie du déplacement entre les positions extrêmes E_{I} et E_{F},
- un moyen 19 qui, au moins pour un certain niveau K de ce signal de glissement G, induit une compensation au moins partielle de l'effet de glissement.

A cet effet, ce moyen applique dans la table pour le reste de l'écart angulaire du déplacement en cours, un facteur de correction à au moins une partie des valeurs initialement prévues, ou corrige en plus ou en moins le nombre réel N' de périodes comptées.

Les moyens comprennent de plus :
- un moyen 20 de comparaison du signal de glissement G à un seuil maximum K' et,
- un moyen 21 qui, dés qu'on détecte le franchissement de ce seuil maximum K', au lieu de chercher une compensation, commande soit notamment en cas de choc la rotation inverse du rotor afin que celui-ci revienne vers sa position initiale E_{I}, soit notamment à l'ouverture, l'arrêt puis un recalage avant la reprise du mouvement.

En combinaison avec ces moyens la porte peut comprendre des détecteurs par exemple de proximité évitant un pincement entre les battants de la porte.

Dans une forme avantageuse de réalisation, le moyen 17 permettant de déterminer le glissement G consiste en un circuit 22 permettant de déceler dans le circuit alimentant le moteur toutes variations anormales de l'intensité I du courant.

Dans une forme préférée de réalisation, le moteur électrique 1 est un moteur asynchrone triphasé et le courant alternatif est issu d'un générateur 8 constitué d'un onduleur à modulation de largeur d'impulsions.

Ces dernières sont issues de trois bras de l'onduleur contrôlant chacun l'une des phases du moteur.

Chacun des bras est à cet effet constitué de deux transistors commutés à la fréquence voulue à partir d'un dispositif de commande.

La fréquence d'alimentation résultante peut être supérieure à la fréquence normale d'utilisation du moteur asynchrone.

Ce type d'onduleur permet d'obtenir une tension variable en amplitude et en fréquence à partir par exemple d'une tension continue fixe.

L'avantage de ce type de générateur est qu'il permet aisément de lire la valeur de fréquence et de déceler les changements de périodes et donc de faciliter leur comptage.

## Revendications

1. Procédé de régulation de la vitesse de rotation d'un moteur électrique (1) à courant alternatif (i) notamment mais non exclusivement un moteur asynchrone, alimenté sous une fréquence variable selon une consigne (C) entre deux positions angulaires extrêmes réglables du rotor (E_{I} et E_{F}) espacées d'un nombre de tours de rotor réglable et dans lesquelles positions extrêmes la vitesse est nulle, ce procédé étant **CARACTERISE** en ce que :
- à l'initialisation, selon le déplacement angulaire du rotor qu'on souhaite obtenir, lequel est prédéterminé en fonction de l'application spécifique et dans tous les cas borné par un état initial (E_{I}) et un état final (E_{F}),
· on détermine, que ce soit par calcul ou expérimentation, le nombre théorique total (N) de périodes complètes (T) du courant alternatif (i) devant alimenter le moteur (1) pour l'entrainer sur un tel déplacement angulaire,
· on mémorise ce nombre théorique total (N),
· en fonction du numéro d'ordre (X) de ces périodes (T) complètes dans leur nombre théorique total (N), voire même du sens du mouvement de rotation commandé, on élabore une table des variations de l'alimentation du moteur à prévoir pour, théoriquement, respecter une consigne de vitesse prédéterminée,
- lors de l'utilisation :
· on compte le nombre réel instantané (N') des périodes complètes du courant alternatif depuis une position extrême (E_{I}) vers l'autre position extrême (E_{F}),
· en fonction de chaque valeur (X') du nombre réel (N') voire même le sens du mouvement de rotation commandé, on adapte l'alimentation du moteur sur la valeur donnée par la table pour le nombre théorique intermédiaire correspondant M.

2. Procédé selon la revendication 1 caractérisé en ce que:
- on élabore un signal (G) représentatif de la différence dite "glissement" entre la vitesse de synchronisme (V_{S}) du moteur et la vitesse réelle (V) de rotation de son rotor,
- en fonction du niveau (H) du signal de glissement (G) et du déplacement angulaire (A) du rotor (2), depuis l'une ces positions extrêmes, on évalue l'écart au moins prévisible entre le nombre réel (N') de périodes du courant alimentant le moteur (1) et le nombre théorique intermédiaire (M) correspondant sur au moins une partie du déplacement entre les dites positions extrêmes (E_{I} et E_{F}),
- en fonction de cet écart, au moins pour une certaine valeur (K) de ce signal (G), on induit une compensation au moins partielle de l'effet de glissement.

3. Procédé selon la revendication 2 caractérisé en ce que, pour cette compensation, dans la table pour le reste de l'écart angulaire du déplacement en cours, on applique un facteur de correction à au moins une partie des valeurs initialement prévues.

4. Procédé selon la revendication 2 caractérisé en ce que, pour cette compensation, on corrige le nombre réel (N') de périodes comptées.

5. Procédé selon l'une quelconque des revendications 1 à 4 caractérisé en ce qu'on compare ce signal de glissement à un seuil maximum (K') et, dés qu'on détecte le franchissement de ce seuil maximum (K'), au lieu de chercher une compensation, on commande la rotation inverse du rotor afin que celui-ci revienne vers sa position initiale (E_{I}).

6. Procédé selon l'une quelconque des revendications 1 à 4 caractérisé en ce qu'on compare ce signal de glissement à un seuil maximum (K') et, dès qu'on détecte le franchissement de ce seuil maximum (K'), au lieu de chercher une compensation, on commande l'arrêt puis un recalage avant la reprise du mouvement.

7. Moyens en vue de la mise en oeuvre du procédé selon l'une quelconque des revendications 1 à 6 caractérisés en ce qu'ils comprennent :
- un moyen (15) de détermination et de mémorisation du nombre total théorique (N) de périodes complètes (T) du courant alternatif (i) alimentant le moteur (1) nécessaire pour aller d'une position extrême (E_{I}) , à l'autre (E_{F}),
- un moyen (16) qui, en fonction du numéro d'ordre (X) de chacune de ces périodes (T) dans leur nombre total, établit une table des variations de l'alimentation du moteur (1) à prévoir pour théoriquement respecter une consigne (C) de vitesse prédéterminée,
- un moyen (151) de comptage du nombre réel instantané (N') de périodes complètes du courant (i) alimentant le moteur (1) depuis une position extrême (E_{I}) vers l'autre position extrême (E_{F}),
- un moyen (161) qui, en fonction de chaque valeur (X') du nombre réel instantané (N') voire même le sens de déplacement, adapte l'alimentation sur la valeur donnée par la table pour le nombre théorique intermédiaire (M) correspondant.

8. Moyens selon la revendication 7 caractérisés en ce qu'ils comprennent :
- un moyen (17) d'élaboration d'un signal (G) représentatif de la différence dite "glissement" entre la vitesse de synchronisme (V_{S}) du moteur (1) et la vitesse réelle (V) de rotation de son rotor (2),
- un moyen (18) qui en fonction du niveau (H) du signal de glissement (G) et une position angulaire (A) du rotor (2), évalue l'écart au moins prévisible entre le nombre réel instantané (N') de périodes du courant alimentant le moteur (1) et le nombre théorique intermédiaire (M) correspondant sur au moins une partie du déplacement entre les positions extrêmes (E_{I} et E_{F}),
- un moyen (19) qui, au moins pour un certain niveau (K) de ce signal de glissement (G) induit une compensation au moins partielle de l'effet de glissement.

9. Moyens selon la revendication 8 caractérisés en ce qu'ils comprennent :
- un moyen (20) de comparaison du signal de glissement (G) à un seuil maximum (K') et de détection du franchissement de ce seuil maximum (K'),
- un moyen (21) de commande de la rotation invese du rotor afin que celui-ci revienne vers sa position initiale (E_{I}), et
- un moyen de commande de l'arrêt puis du récalage avant reprise du mouvement.

10. Moyens selon la revendication 8 ou 9 caractérisés en ce que le moyen (17) déterminant le glissement (G) consiste en un circuit (22) décelant dans le circuit alimentant le moteur toutes variations anormales de l'intensité du courant.

## Claims

1. A method for controlling the rotation speed of an alternating current (i) electric motor (1), specifically but not exclusively an asynchronous motor, supplied at a variable frequency in accordance with a reference (C) between two adjustable extreme angular positions of the rotor (E_{I} and E_{F}) in adjustable number of turns of the rotor apart, in which extreme position's the speed is zero, this method being characterised in that:
- on initialisation, in accordance with the desired angular displacement of the rotor, which is predetermined in relation to a specific application and in all cases bounded by an initial stage (E_{I}) and a final state (E_{F}),
· the total theoretical number (N) of complete periods (T) of the alternating current (i) which must be provided to the motor (1) to displace it through such an angular displacement is determined by either calculation or experiment,
· this theoretical total number (N) is placed in memory,
· depending on the serial number (X) of complete periods (T) in the theoretical total number (N), and the direction of the rotational movement required, a table of the various necessary inputs to the motor which theoretically comply with a predetermined reference setting is prepared,
- in use:
· the actual instantaneous number (N') of complete periods of alternating current between one extreme position (E_{I}) and the other extreme position (E_{F}) is counted,
· the input to the motor is adjusted in relation to each value (X') of the actual number (N') and the required direction of movement to the value given by the table for the corresponding intermediate theoretical number M.

2. A method according to claim 1, characterised in that:
- a signal (G) representing the difference, called the "slip", between the synchronisation speed (V_{S}) of the motor and the actual speed (V) of rotation of its rotor is produced,
- the at least foreseeable difference between the actual number (N') of periods of the current supplying the motor (1) and the intermediate theoretical number (M) corresponding to at least part of the displacement between the said extreme positions (E_{I} and E_{F}) is evaluated on the basis of the level (H) of the slip signal (G) and angular displacement (A) of the rotor (2),
- at least partial compensation for the slip effect is introduced in relation to this difference, at least for a certain value (K) of this signal (G).

3. A method according to claim 2, characterised in that the correction factor is applied to at least a portion of the values initially provided for this compensation in the table to the remainder of the angular difference of the displacement in progress.

4. A method according to claim 2, characterised in that the actual number (N') of periods counted is corrected for the purposes of this compensation.

5. A method according to any one of claims 1 to 4, characterised in that the slip signal is compared with a maximum threshold (K') and in that reverse rotation of the rotor is controlled so that the latter returns to its initial position (E_{I}), instead of attempting compensation, once this maximum threshold (K') has been found to be exceeded.

6. A method according to any one of claims 1 to 4, characterised in that this slip signal is compared with a maximum threshold (K') and in that stoppage and resetting is ordered before movement is resumed, instead of attempting compensation, once this maximum threshold (K') has been exceeded.

7. Means for implementation of the method according to any one of claims 1 to 6, characterised in that they comprise:
- means (15) for determining and recording in memory the total theoretical number (N) of complete periods (T) of the alternating current (i) supplying the motor (1) which are required to pass from one extreme position (E₁) to the other (E_{F}),
- means (16) which produce a table of changes in the input to motor (1) which have to be provided in order to comply theoretically with a predetermined speed reference (C) on the basis of the serial number (X) of each of these periods (T) in the total number thereof,
- means (152) for counting the actual instantaneous number (N') of complete periods of current (i) fed to the motor (1) between one extreme position (E_{I}) and the other extreme position (E_{F}),
- means (161) which adjusts the supply to the value given by the table for the corresponding intermediate theoretical number (M) as a function of each value (X') of the actual instantaneous number (N') and the direction of movement.

8. Means according to claims 7, characterised in that they comprise:
- means (17) for producing a signal (G) representative of the difference, called the "slip", between the synchronisation speed (V_{S}) of the motor (1) and the actual speed (V) of rotation of its rotor (2),
- means (18) which evaluates at least the foreseeable difference between the actual instantaneous number (N') of periods of the current supplying the motor (1) and the intermediate theoretical number (M) corresponding to at least part of the displacement between the extreme positions (E_{I} and E_{F}) as a function of the magnitude (H) of the slip signal (G) and an angular position (A) of the rotor (2),
- means (19) which bring about at least partial compensation for the slip effect at least for a certain level (K) of this slip signal (G).

9. Means according to claim 8, characterised in that they comprise:
- means (20) for comparing the slip signal (G) with a maximum threshold (K') and detecting when this maximum threshold (K') is exceeded,
- means (21) for controlling reverse rotation of the rotor so that this returns to its initial position (E_{I}), and
- means for controlling stoppage followed by resetting before movement is resumed.

10. Means according to claims 8 or 9, characterised in that the means (17) determining the slip (G) comprises a circuit (22) which detects any abnormal changes in the current strength in the circuits supplying the motor.

## Patentansprüche

1. Verfahren zum Regeln der Drehzahl eines Wechselstrom-Elektromotors (1), insbesondere, jedoch nicht ausschließlich, eines Asynchronmotors, der mit einer entsprechend einem Einstellwert (C) veränderlichen Frequenz zwischen zwei regelbaren Endwinkelstellungen des Läufers (E_{I} und E_{F}) ansteuerbar ist, die um eine regelbare Anzahl Rotorumdrehungen voneinander beabstandet sind, wobei bei diesen Endstellungen die Drehzahl Null ist,
**dadurch GEKENNZEICHNET**, daß
- bei Initialisierung entsprechend der gewünschtermaßen zu erzielenden Winkelverschiebung des Läufers, die in Abhängigkeit vom jeweiligen Einsatzzweck vorgegeben und in allen Fällen durch einen Ausgangszustand (E_{I}) und einen Endzustand (E_{F}) begrenzt ist,
· rechnerisch oder experimentell die theoretische Gesamtzahl (N) der vollständigen Perioden (T) des Wechselstroms (i) bestimmt wird, mit welcher der Motor (1) angesteuert werden muß, um ihn zu einer solchen Winkelverschiebung anzutreiben,
· diese theoretische Gesamtzahl (N) gespeichert wird,
· in Abhängigkeit von der laufenden Nummer (X) dieser vollständigen Perioden (T) in deren theoretischer Gesamtzahl (N), ja sogar von der angesteuerten Drehrichtung, eine Tabelle der vorzusehenden Veränderungen der Motoransteuerung erarbeitet wird, um theoretisch einen vorgegebenen Einstellwert für die Drehzahl zu berücksichtigen,
- während des Einsatzes:
· die augenblickliche Ist-Zahl (N') der vollständigen Perioden des Wechselstroms ab einer Endstellung (E_{I}) bis zur anderen Endstellung (E_{F}) gezählt wird,
· in Abhängigkeit von jedem Wert (X') der Ist-Zahl (N'), sogar der angesteuerten Drehrichtung, die Motoransteuerung an den durch die Tabelle für die entsprechende theoretische Zwischenzahl M vorgegebenen Wert angepaßt wird.

2. Verfahren nach Anspruch 1, dadurch gekennzeichnet daß:
- ein für die als "Abweichung" bezeichnete Differenz zwischen der Synchronisierdrehzahl (V_{S}) des Motors und der Ist-Drehzahl (V) seines Läufers repräsentatives Signal (G) erzeugt wird,
- in Abhängigkeit vom Pegel (H) des Abweichungssignals (G) und von der Winkelverschiebung (A) des Läufers (2) von einer der Endstellungen aus der zumindest vorhersehbare Abstand zwischen der Ist-Zahl (N') der Perioden des Versorgungsstroms für den Motor (1) und der theoretischen Zwischenzahl (M), die zumindest einem Teil der Verschiebung zwischen den beiden Endstellungen (E_{I} und E_{F}) entspricht, überschlägig ermittelt wird,
- in Abhängigkeit von diesem Abstand, zumindest für einen bestimmten Wert (K) dieses Signals (G), ein zumindest teilweiser Ausgleich des Abweicheffekts veranlaßt wird.

3. Verfahren nach Anspruch 2, dadurch gekennzeichnet, daß für diesen Ausgleich in der Tabelle für den Rest des Winkelabstands der laufenden Verschiebung ein Korrekturfaktor zumindest bei einem Teil der anfänglich vorgesehenen Werte eingesetzt wird.

4. Verfahren nach Anspruch 2, dadurch gekennzeichnet, daß für diesen Ausgleich die Ist-Zahl (N') der gezählten Perioden korrigiert wird.

5. Verfahren nach einem der Ansprüche 1 bis 4, dadurch gekennzeichnet, daß das Abweichungssignal mit einem Maximalschwellenwert (K') verglichen wird, und daß bei Feststellung des Überschreitens dieses Maximalschwellenwerts (K') statt des Versuchs eines Ausgleichs der Läufer zur Drehung in umgekehrter Richtung angesteuert wird, um diesen wieder zur Ausgangsstellung (E_{I}) zurückzuführen.

6. Verfahren nach einem der Ansprüche 1 bis 4, dadurch gekennzeichnet, daß das Abweichungssignal mit einem Maximalschwellenwert (K') verglichen wird, und daß bei Feststellung des Überschreitens dieses Maximalschwellenwerts (K') statt des Versuchs eines Ausgleichs der Motor zum Ausschalten angesteuert wird, worauf er vor erneuter Bewegung wieder optimal eingestellt wird.

7. Vorrichtung zur Durchführung des Verfahrens nach einem der Ansprüche 1 bis 6, dadurch gekennzeichnet, daß sie folgendes aufweist:
- eine Einrichtung (15) zur Bestimmung und Speicherung der theoretischen Gesamtzahl (N) der vollständigen Perioden (T) des Wechselstroms (i) zur Stromversorgung des Motors (1), die für den Durchgang von einer Endstellung (E_{I}) zur anderen (E_{F}) erforderlich sind,
- eine Einrichtung (16), die in Abhängigkeit von der laufenden Nummer (X) jeder dieser Perioden (T) in deren Gesamtzahl eine Tabelle der vorzusehenden Veränderungen der Motoransteuerung erarbeitet, um theoretisch einen vorgegebenen Einstellwert für die Drehzahl zu berücksichtigen,
- eine Einrichtung (151) zum Zählen der augenblicklichen Ist-Zahl (N') der vollständigen Perioden des Versorgungsstroms für den Motor (1) ab einer Endstellung (E_{I}) bis zur anderen Endstellung (E_{F}),
- eine Einrichtung (161), die in Abhängigkeit von jedem Wert (X') der augenblicklichen Ist-Zahl (N'), ja sogar von der Verschieberichtung, die Ansteuerung auf den von der Tabelle für die entsprechende theoretische ZwIschenzahl (M) vorgegebenen Wert die Stromversorgung anpaßt.

8. Vorrichtung nach Anspruch 7, dadurch gekennzeichnet, daß sie folgendes aufweist:
- eine Einrichtung (17) zur Erzeugung eines für die als "Abweichung" bezeichnete Differenz zwischen der Synchronisierdrehzahl (V_{S}) des Motors und der Ist-Drehzahl (V) seines Läufers repräsentativen Signals (G),
eine Einrichtung (18), die in Abhängigkeit vom Pegel (H) des Abweichungssignals (G) und von der Winkelverschiebung (A) des Läufers (2) den zumindest vorhersehbaren Abstand zwischen der Ist-Zahl (N') der Perioden des Versorgungsstroms für den Motor (1) und der theoretischen Zwischenzahl (M) überschlägig ermittelt, die zumindest einem Teil der Verschiebung zwischen den beiden Endstellungen (E_{I} und E_{F}) entspricht,
- eine Einrichtung (₁9), die zumindest bei einem bestimmten Pegel (K) dieses Abweichungssignals (G) einen zumindest teilweisen Ausgleich des Abweicheffekts veranlaßt.

9. Vorrichtung nach Anspruch 8, dadurch gekennzeichnet, daß sie folgendes aufweist:
- eine Einrichtung (20) zum Vergleichen des Abweichungssignals (G) mit einem Maximalschwellenwert (K') und Erfassen des Überschreitens diese Maximalschwellenwerts (K'),
- eine Einrichtung (21) zum Ansteuern des Läufers zur Drehung in umgekehrter Richtung, damit dieser in seine Ausgangsstellung (E_{I}) zurückkehrt, und
- eine Einrichtung zum Ansteuern des Abschaltens und zur anschließenden Neueinstellung vor erneuter Bewegung.

10. Vorrichtung nach Anspruch 8 oder 9, dadurch gekennzeichnet, daß die Einrichtung (17) zum Feststellen einer Abweichung (G) aus einer Schaltung (22) besteht, welche im Motorversorgungskreis alle ungewöhnlichen Veränderungen der Stromstärke nachweist.
